# EUROPÄISCHE PATENTSCHRIFT

(11) **EP 2 426 423 B1**
(45) Veröffentlichungstag und Bekanntmachung des Hinweises auf die Patenterteilung: **21.11.2018**
(21) Anmeldenummer: 11007225.3
(22) Anmeldetag: 06.09.2011
(51) Int. Cl.: F24D 19/00, F24D 19/10, B01J 47/00, C02F 1/00, C02F 1/48, G05D 21/02, C02F 103/02, C02F 1/42, B01J 47/02, B01J 49/00

(54) **Vorrichtung und System zum Konditionieren von Wasser für wasserführende Kreislaufsysteme**
Device and system for treating water for water-bearing circulation systems
Dispositif et système de conditionnement d'eau pour systèmes de circuit transportant de l'eau

(30) Priorität: 07.09.2010 DE 102010044567
(43) Veröffentlichungstag der Anmeldung: 07.03.2012
(60) Teilanmeldung: 16001359.5
(73) Patentinhaber: AEW Wassertechnologie GmbH, 21218 Seevetal-Hittfeld (DE)
(72) Erfinder: Jungmann, Hans-Peter, 21385 Amelinghausen (DE); Bürgel, Dietrich, 20535 Hamburg (DE)
(74) Vertreter: Meissner Bolte Partnerschaft mbB

(56) Entgegenhaltungen:
- WO-A2-2009/071066
- DE-A1-102007 009 959
- DE-A1-102008 028 051
- DE-U- 7 026 355
- DE-U1-202004 008 670
- DE-U1-202010 004 292
- FR-A1- 2 566 283

## Beschreibung

Die Erfindung betrifft eine Reinigungsvorrichtung für Kreislaufwasser von wasserführenden Kreislaufsystemen mit wenigstens einem Zuleitungsanschluss für Kreislaufwasser und einem Ableitungsanschluss für gereinigtes Kreislaufwasser, einem Filterelement, einer Pumpe, über die das Filterelement druckbeaufschlagbar ist, und einem magnetischen Element in Verbindung mit dem Filterelement. Des Weiteren betrifft die Erfindung ein System aus der zuvor genannten Vorrichtung mit einer Vorrichtung zum Konditionieren von Wasser zum Befüllen von wasserführenden Kreislaufsystemen mit wenigstens einem Zuleitungsanschluss für Befüllwasser und einem Ableitungsanschluss für konditioniertes Kreislaufwasser, einem Element zur Einstellung der Leitfähigkeit des konditionierten Kreislaufwassers und einem Steuerelement.

Unter wasserführenden Kreislaufsystemen werden Heizungskreisläufe von Warmwasserheizungsanlagen, Kühlkreislaufe, Kältekreisläufe, Erdwärmekreisläufe und Solarkreisläufe verstanden.

Eine weitere Schwierigkeit stellen insbesondere die Bestandsanlagen dar, da hier häufig bereits hinreichende Ablagerungen und Problemelemente im Kreislaufsystem vorhanden sind, die eine Beschädigung bzw. den Ausfall der darin eingebauten Komponenten verursachen können. Dafür wird eine Aufbereitungsvorrichtung vorgesehen, mit der das Bestandskreislaufwasser bzw. das Bestandssystem gereinigt wird. Hierfür werden insbesondere dem Kreislaufwasser Zusätze zugeführt, die diese Ablagerungen, Korrosionsrückstände und Schlämme lösen. Notwendig ist, das gelöste Material aus dem Kreislaufsystem zu entfernen. Dieses erfolgt gemäß dem Stand der Technik über Filter, die auch in Verbindung mit Magnetelementen zur Abscheidung von Magnetit u.a. Rückständen, die durch magnetische Wirkung angezogen werden, versehen sind.

Hinsichtlich der Reinigungsvorrichtung für Heizungswasser für Warmwasserheizungsanlagen offenbart DE 69 102 282 T2 eine Vorrichtung zum Überwachen und Rekonditionieren von Heizwasser. Dabei wird die Vorrichtung als Abzweig in eine Heizkreisanlage integriert, die über zwei Absperrventile abtrennbar ist. In der Vorrichtung ist eine Pumpe enthalten und verschiedene Messsensoren und Filter. Dabei ist explizit ein Magnetfilter und ein Partikelfilter vorgesehen sowie eine Mess-/Steuer-/Regeleinheit für pH-Wert, Sauerstoffgehalt und Leitfähigkeit.

DE 70 26 355 U offenbart eine Filtriervorrichtung für strömendes Wasser, bei dem in einem Filterelement eine Hülse vorgesehen ist, in der ein Magnet zur Abscheidung von Magnetit aus Heizungswasser vorgesehen ist.

DE 198 33 239 C1 offenbart eine Trennvorrichtung, bei der statt eines Feststoffmagneten ein Elektromagnet an der Außenwand der Filtervorrichtung vorgesehen Ist.

DE 20 2010 004 292 U1 offenbart ebenfalls eine Vorrichtung, die über Absperrventile in Parallelschaltung zum Heizkreislauf vorgesehen ist. Dabei ist eine Pumpe installiert, die das Wasser durch das Gehäuse und dem darin vorgesehenen Einsatz hindurch pumpt. Bei dem Einsatz handelt es sich dabei um einen Filtrationseinsatz.

DE 7026355 U zeigt eine Filtriervorrichtung für strömendes Wasser. Die Filtriervorrichtung wird dabei im Wasserleitungssystem, insbesondere bei Zentralheizungsanlagen eingesetzt, um Fremdkörper aus diesem zu entfernen. Die Vorrichtung wird dabei fest innerhalb eines Leitungsnetzes angeschlossen.

FR 2 566 283 A1 offenbart eine gattungsgemäße Vorrichtung für die Klärung und Schlammentfernung von Wasser für Heizungsanlagen von Blöcken von Gebäuden mit einem Filterelement, das eine Kombination eines magnetischen Sensors und einer Filterpatrone aufweist.

Die Merkmale des Oberbegriffs von Anspruch 1 sind aus Dokument DE 7026355 U und aus FR 25 66 283 A1 bekannt.
Nachteilig bei all diesen Vorrichtungen ist, dass es zwar innerhalb der Filtereinheit möglich ist, die Magnetitelemente, die in dem Heizungswasser enthalten sind, abzuscheiden, dieses allerdings nicht zwangsläufig erfolgt, so dass der Benutzer der Vorrichtung darauf achten muss, dass aktiv das Magnetit ebenfalls entfernt wird.

Aufgabe der Erfindung ist es daher, die Abscheidung von Magnetit dahingehend zu verbessern, dass sichergestellt wird, dass das Magnetit automatisch bei einem Kombinationsfilter, der sowohl Partikel als auch Magnetit abscheidet, beim Filterwechsel aus diesem entfernt wird.

Erfindungsgemäß wird diese Aufgabe gelöst durch eine Vorrichtung zur Reinigung von Kreislaufwasser mit wenigstens einem Zuleitungsanschluss (61) für Kreislaufwasser und einem Ableitungsanschluss (66) für gereinigtes Kreislaufwasser, einem Filterelement (64), einer Pumpe (63), über die das Filterelement (64) mit dem Kreislaufwasser druckbeaufschlagbar ist, und mit einem Magnetabscheider (70) in Verbindung mit dem Filterelement (64), dadurch gekennzeichnet, dass der Magnetabscheider ein Magnetelement (81) aufweist, dass beim Öffnen des Filterelements (64) zwangsgeführt aus dem Filterelement (64) entfernbar ist, und dass das Magnetelement auf einem stabförmigen Element angeordnet ist, dass in einer Hülse in einem Filterbereich des Filterelements vorgesehen ist, und dass das Magnetelement in der Hülse aus dem Filterbereich zwangsgeführt herausbewegbar ist, indem das Stabelement mit einem Verschlusselement des Filters wirkverbunden ist, und das Stabelement beim Öffnen des Verschlusselementes eine Bewegung aus der Hülse heraus durchführt.

Hierdurch wird automatisiert sichergestellt, dass das Magnetit nach dem Entfernen des Magnetelementes aus dem Filterbereich abgeschieden wird, ohne dass der Nutzer speziell darauf achten muss, wodurch sich die Sicherheit der Abscheidung erhöht. Durch das Verknüpfen des Entnahmevorganges mit dem Öffnen des Filters als solches wird optimal gewährleistet, dass die Magnete aus dem Filterbereich entfernt werden, und damit das Magnetit aus dem Filter entfernt werden kann, ohne dass der Nutzer darauf speziell achten müsste.

Eine weitere Lehre der Erfindung sieht vor, dass an der Hülse ein Abscheider vorgesehen ist. Durch das Vorsehen des Abscheiders wird es möglich, die Wirkverbesserung der Abscheidung zu erhöhen, und zu gewährleisten, dass tatsächlich sämtliche Rückstände die sich an der Hülse befinden, entfernt werden.

Eine weitere Lehre der Erfindung sieht vor, dass ein Messsensor zur Messung der Durchflussmenge durch den Filter vorgesehen ist und/oder dass die Pumpe in Abhängigkeit der Durchflussmenge gesteuert ist. Hierdurch wird gewährleistet, dass mit zunehmendem Verschmutzungsgrad die Filterwirkung bis zum Endnutzbereich des Filters aufrecht erhalten wird. Darüber hinaus erfolgt zum Schutz der Pumpe bei Erreichen einer vorgeschriebenen Mindestdurchflussmenge die Abschaltung der Pumpe und Störmeldeweiterleitung über das Display an eine Gebäudeleittechnik (sofern vorhanden). Bei Erreichen einer weiteren voreingestellten Durchflussmenge erfolgt eine Voralarmmeldung.

Ein weiterer Teilaspekt der Erfindung wird nachfolgend dargestellt. Es ist heutzutage üblich, ein Gebäude über wasserführende Kreislaufsysteme zu erwärmen oder zu kühlen. Als Basis hierzu dient in der Regel Leitungswasser. Bei der Verwendung von reinem Leitungswasser tritt das Problem auf, dass die im Wasser enthaltenen Stoffe ausfallen können, Ablagerungen und Verschlammungen in dem Kreislaufsystem auftreten und darüber hinaus Korrosionen und die daraus resultierenden Korrosionsrückstände ausfallen können. Bei neu errichteten Kreislaufsystemen muss dieser Entwicklung bereits bei der Befüllung der Kreislaufsysteme entgegengewirkt werden. Hierfür muss beispielsweise nach der Vorschrift VDI 2035 u.a., eine Konditionierung des Kreislaufsystems vorgenommen werden. Dieses ist insbesondere deswegen notwendig, weil in Deutschland nach der VDI 2035 u.a. es den Herstellern von Anlagen und Komponenten möglich ist, Gewährleistungs- und Garantieansprüche zurückzuweisen, wenn es dem Anlagenbetreiber nicht möglich ist, nachzuweisen, dass Richtlinien konform konditioniertes Wasser eingesetzt wurde. Dieses ist insbesondere bei privaten Haushalten schwierig nachzuweisen.

Aus DE 2007 055 132 A1 ist eine Überwachungs- und Diagnosearmatur für Helzungswasser bekannt. Die Vorrichtung wird in den Heizkreis integriert und weist eine Messsensorik für die Messung des pH-Werts, die elektrische Leitfähigkeit und zur Trübemessung auf. Des Weiteren weist die Vorrichtung einen Füllwasseranschluss mit Durchflussmengenmesser auf. Eine Auswerteeinheit vergleicht die ermittelten Sensordaten mit Sollwerten. Wird ein solcher Sollwert überschritten, wird von der Vorrichtung eine Alarmmeldung ausgegeben. Eine solche Vorrichtung eignet sich für große Heizungsanlagen, bei denen dann im Alarmfall aktiv durch eine Person Handlungen zur Einstellung des Heizungswassers vorgenommen werden.

Aus DE 101 55 946 A1 ist ein Verfahren zur Vermeidung von Schäden an Heizkesseln durch Kesselsteinbildung offenbart. Dabei wird in eine Füllleitung ein Ionentauscher integriert, durch den eine Vollentsalzung des Wassers, das der Heizungsanlage zugeführt wird, gewährleistet wird.

WO 2009 071066 A2 offenbart eine Wasserenthärtungsanlage mit einer IIonenaustauschvorrichtung, die ein lonenaustauschharz umfasst. In einer ersten Ausführungsform wird ein Rohwasserstrom aufgeteilt In zwei Teilströme von dem ein Teilstrom enthärtet und mit dem zweiten Teil Strom wieder verschnitten wird. Weiterhin ist eine elektronische Steuervorrichtung vorgesehen, die das Enthärtungsergebnis überwacht und die feststellt, wann das Ionentauschharz regeneriert werden muss. Dafür sind Leitfähigkeitssensoren in der Anlage vorgesehen. Eine zweite Vorrichtung umfasst eine Bypassleitung, in der lediglich ein Regelventil und ein Wassermengenzähler vorgesehen sind, der den Rohwasserteilstrom bestimmt. Im Hauptstrom wird die Leitfähigkeit gemessen, die Menge des zweiten Teilstroms bestimmt, und gleichzeitig wird der Teilstrom enthärtet. Anschließend wird der enthärtete Teilstrom mit dem Rohteilstrom wieder verschnitten.

DE 20 2010 004 292 U1 offenbart ein Modul zur Aufbereitung von Heizungskreislaufwasser. Dieses Modul umfasst einen Frischwasseranschluss zur Befüllung des Heizungskreises. Zentrales Element ist ein Gehäuse, in dem ein Einsatz einsetzbar ist. Dieser Einsatz ist auswechselbar. Ein offenbarter Einsatz ist dabei die Enthärtung und Entsalzung des zugeführten Wassers. Dafür Ist eine Leitfähigkeitsmessung vorgesehen. Es hat sich allerdings ergeben, dass das Vorsehen von vollentsalztem Befüllwasser in Verbindung mit Sauerstoff zu Problemen hinsichtlich Korrosion innerhalb der Heizungsanlage führen kann.

Aus diesem Grund ist es eine Ergänzungsaufgabe der Erfindung, ein System in Verbindung mit der zuvor beschriebenen Vorrichtung bereit zu stellen, mit der optimal konditioniertes Wasser für den Einsatz in wasserführenden Kreislaufsystemen bereitgestellt wird. Dafür lässt sich die zuvor beschriebene Vorrichtung mit einer nachfolgend beschriebenen Vorrichtung zu einem System zusammenfügen, das dann ein optimales Kreislaufwasser, insbesondere für den Bereich von Bestandssystemen optimiert,. Bei dieser Vorrichtung handelt es sich um eine Vorrichtung zum Konditionieren von Wasser zum Befüllen von wasserführenden Kreislaufsystemen mit wenigstens einem Zuleitungsanschluss für Befüllwasser und einem Ableitungsanschluss für konditioniertes Kreislaufwasser, einem Element zur Einstellung der Leitfähigkeit des konditionierten Kreislaufwassers und einem Steuerelement, wobei die Vorrichtung so ausgeführt ist, dass ein Tellvolumenstrom des Befüllwassers an dem Element zur Einstellung der Leitfähigkeit des Befüllwassers vorbeiführbar ist, und mit dem in dem Element zur Einstellung der Leitfähigkeit des Befüllwassers verschneidbar ist, und dass der Teilvolumenstrom einstellbar ist.

Es hat sich als vorteilhaft herausgestellt, dass die Ausfällungs-, Ablagerungs- und Korrosionsproblematik optimal durch die Einstellung der Leitfähigkeit des Wassers aus 50 - 200µslcm beträgt. Durch die erfindungsgemäße Vorrichtung wird auf einfache Weise eine solche Leitfähigkeit einstellbar, da das Einstellen einer Leitfähigkeit bei Volldurchleitung durch ein Element zur Einstellung der Leitfähigkeit des Wassers sehr aufwendig und kompliziert ist.

Eine besonders vorteilhafte Lehre der Erfindung sieht vor, dass zur Bereitstellung des Teilvolumenstroms ein Mischelement vorgesehen ist, dessen hydraulischer Widerstand zur Einstellung des Teilvolumenstroms einstellbar ist. Dieses Mischelement stellt eine besonders einfache Ausführungsform der Erfindung dar, die zum einen sehr kostengünstig bereitstellbar ist und auch einfach in der Handhabung ist, so dass die erfindungsgemäße Vorrichtung, insbesondere für den Einsatz in Privathaushalten geeignet ist.

Eine weitere Lehre der Erfindung sieht vor, dass das Mischelement ein parallel zum Element zur Einstellung der Leitfähigkeit einen parallel geschalteten Leitungsweg aufweist. Weiterhin ist es vorteilhaft, wenn die Einstellung des hydraulischen Widerstands des Mischelementes über ein Element zur Änderung des Querschnitts des Leitungsweges erfolgt, wobei es sich besonders bevorzugt um eine Blende und/oder sonstige Drosselvorrichtungen handelt. Diese Ausführungsform stellt eine einfach zu betreibende und kostengünstig herzustellende erfindungsgemäße Vorrichtung dar.

Eine weitere Lehre der Erfindung sieht vor, dass ein Messsensor zur Messung der Leitfähigkeit des konditionierten Kreislaufwassers vorgesehen ist, und dass der Teilvolumenstrom in Abhängigkeit des Messergebnisses einstellbar ist. Über die Steuerung ist es möglich, direkt in Abhängigkeit der Leitfähigkeit des konditionierten Wassers den hydraulischen Widerstand des Mischelements manuell oder automatisch einzustellen und/oder das Verschneideergebnis zu überwachen. Dabei ist es insbesondere vorteilhaft, wenn an Hand der Überwachung eine Grenzwertüberschreitung der Leitfähigkeit feststellbar ist, so dass in diesem Fall eine Alarmmeldung hinsichtlich des Verbrauchs des Elements zur Einstellung der Leitfähigkeit des Befüllwassers angezeigt wird, und/oder der Betrieb der Vorrichtung eingestellt wird. Hierfür ist vorteilhafter Weise ein ansteuerbares Absperrventil vorgesehen. Weiterhin ist vorteilhaft, wenn das Absperrventil als Magnetventil ausgeführt ist. Weiterhin ist vorteilhaft, dass das Absperrventil so ausgeführt ist, dass ein zu hoher Systemdruck Im Kreislaufsystem nicht rückwärts durch die Anlage in das Trinkwassersystem drückbar ist. Vorteilhaft ist weiterhin, einen Drucksensor und/oder eine Nutzung eines vorhandenen Drucksensors Im Kreislaufsystem vorzusehen, um eine druckabhängige vollautomatische Befüllung des Kreislaufsystems über die dafür ausgelegte Steuerung vorzunehmen. Bei Nutzung dieser zusätzlichen Ausstattung wird gleichzeitig eine Leckageüberwachung ermöglicht.

Eine weitere Lehre der Erfindung sieht vor, dass ein Tank in Verbindung mit einer Pumpe vorgesehen ist. In dem Tank Ist vorteilhafter Weise eine Flüssigkeit enthalten, die zur weiteren Konditionierung des Befüllwassers dient, um weiteren Korrosionsschutz und dgl. bereit zu stellen.

Eine weitere Lehre der Erfindung sieht vor, dass ein Messsensor zur Messung der Durchflussmenge des konditionierten Wassers vorgesehen ist. Hierdurch wird es möglich, die Konditionierungsflüssigkeit mengengenau abzugeben. Weiterhin wird es ebenfalls möglich, durch die Durchflussmengenmessung die tatsächlich dem Kreislausystem zugeführte konditionierte Wassermenge zu bestimmen.

Eine weitere Lehre der Erfindung sieht vor, dass das Element zur Einstellung der Leitfähigkeit ein lonentauscherharzelement ist. Durch ein solches Element ist es möglich, einen Teilvolumenstrom von vollentsalztem Wasser kostengünstig herzustellen.

Eine weitere Lehre der Erfindung sieht vor, dass die Vorrichtung in einem Gehäuse mit Griff und ausfahrbaren Rollen angeordnet ist. Durch das Vorsehen eines solchen Gehäuses wird es möglich, die erfindungsgemäße Vorrichtung als mobiles Gerät auszuführen, so dass das Gerät zur Befüllung von Kreislaufsystemen im Neuinstallationsbereich und/oder Ergänzungsbefüllung von Kreislaufsystemen temporär vorgesehen wird, wodurch die Kosten zur Bereitstellung des konditionierten Wassers niedrig gehalten werden, da der Kunde nicht für das Gerät bezahlen muss, sondern lediglich mengengenau eine Abrechnung des hergestellten konditionierten Wassers möglich ist. Alternativ ist es möglich, die erfindungsgemäße Vorrichtung stationär vorzusehen.

Nachfolgend wird die Erfindung an Hand eines Ausführungsbeispiels mit begleichenden Zeichnungen näher beschrieben. Dabei zeigen:
- Fig. 1:: ein Flussdiagramm der ersten Vorrichtung,
- Fig. 2:: eine geschnittene Seitenansicht eines erfindungsgemäßen Mischers mit Element zur Einstellung der Leitfähigkeit,
- Fig. 3:: eine teilgeschnittene Seitenansicht eines Mischers,
- Fig. 4:: eine vergrößerte Detailansicht zu Fig. 3,
- Fig. 5:: eine räumliche Ansicht der ersten Vorrichtung in einem Gehäuse,
- Fig. 6:: eine weitere räumliche Ansicht des Gehäuses,
- Fig. 7:: eine schematische Fließansicht einer erfindungsgemäßen Vorrichtung,
- Fig. 8:: eine teilgeschnittene Seitenansicht eines erfindungsgemäßen Filterelements mit Magnetelement in inaktiver Stellung, und
- Fig. 9:: eine Teildarstellung des erfindungsgemäßen Filterelements mit Magnetelement in aktiver Stellung.

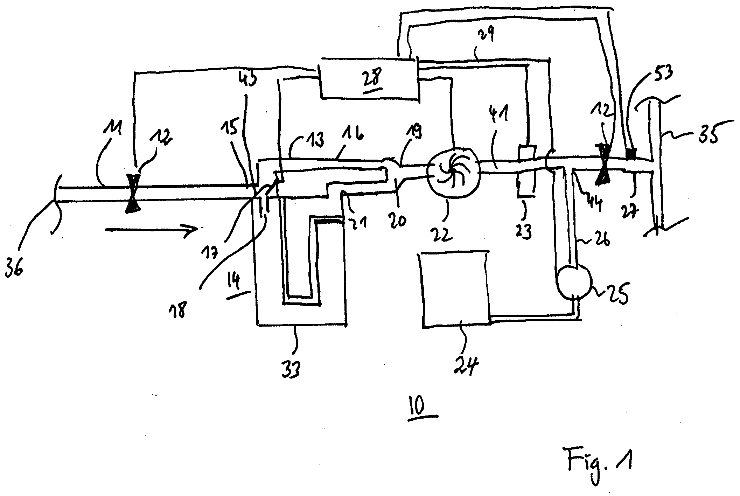

Fig. 1 zeigt eine Konditionierungsvorrichtung 10. An einem Zuleitungsanschluss 11 ist ein Frischwasseranschluss 36 vorgesehen. Im Zuleitungsanschluss 11 ist ein Absperrventil 12 vorgesehen. Der Zuleitungsanschluss 11 mündet in eine Einlassseite 15 eines Mischers 13. Der Mischer 13 ist mit einem lonentauscher 14 verbunden. Im Mischer 13 ist an einer Einlassseite 15 ein Trennbereich 43 vorgesehen. In diesem Trennbereich 43 beginnt ein Leitungsweg 16, der mit einer Blende 17 als Drosselsystem versehen ist. Des Weiteren ist der Trennbereich 43 mit einem Ionentauschereinlass 18 des Ionentauschers 14 verbunden.

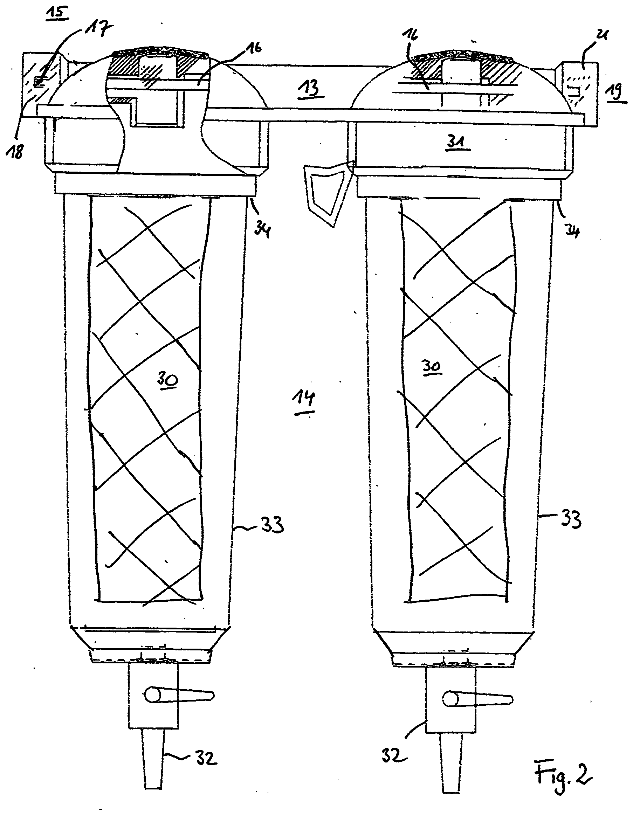

Bestandteil des Mischers 13 sind Deckelelemente 31 (siehe Fig. 2), die einen Gefäßanschluss 34 für ein Gefäß 33 des lonentauschers 14 aufweisen. Innerhalb des Gefäßes 33 sind lonentauscherharzelemente 30 angeordnet. An der Unterseite des Gefäßes 33 ist ein Auslass 32 vorgesehen, über den beispielsweise für den Austausch von lonentauscherharzelementen 33 der lonentauscher 14 wasserfrei gemacht werden kann. Das Befüllwasser, das durch den Ionentauschereinlass 18 in den lonentauscher 14 eintritt, durchläuft die lonentauscherharzelemente 30 und wird dabei voll entsalzt/voll enthärtet. Das so behandelte Wasser tritt am lonentauscherauslass 21 aus und gelangt in den Verschnittbereich 20 an der Auslassseite 19 des Mischers 13. Ebenfalls in den Verschnittbereich 20 mündet der Leitungsweg 16. An der Auslassseite 19 ist ein Leitungsweg 41 vorgesehen, in dem ein Durchflussmengenmesser 22, ein Leitfähigkeitsmesser 23 und ein Anschluss 44 für eine weitere Leitung 26 vorgesehen sind. Am Ende der Leitung 41 ist ein Ableitungsanschluss 27 vorgesehen. Vor dem Ableitungsanschluss 27 befindet sich ein Absperrventil mit integriertem Rückschlagventil 12. Der Ableitungsanschluss 27 wird mit dem Kreislaufsystem 35 verbunden. Des Weiteren ist eine Steuerung 28 vorgesehen. Die Steuerung 28 ist über elektrische Leitungen 29 mit einem Antriebselement (nicht dargestellt) der Blende 17 (alternativ sind auch andere Drosselsysteme 17 einsetzbar), dem Durchflussmengenmesser 22, dem Leitfähigkeitsmesser 23, dem Absperrventil 12, gegebenenfalls dem Drucksensor 53 und der Pumpe 25 verbunden.

Die Leitung 26 ist mit einem Tank 24 verbunden, in dem eine Konditionierungsflüssigkeit als Additiv zum leitfähigkeitseingestellten Befüllwasser vorgesehen ist. In der Leitung 26 ist eine Pumpe 25 vorgesehen. Die Konditionierungsflüssigkeit wird über die Pumpe 25 durch die Leitung 26 in die Leitung 41 zugeführt, wodurch die Additive dem Befüllwasser zugeführt werden. Die zugeführte Menge wird über die Steuerung in Abhängigkeit des Messergebnisses des Durchflussmengenmessers 22 eingestellt.

Der hydraulische Widerstand des Leitungsweges 16 wird über die Blende o. a. Drosselsysteme 17 eingestellt. Die Wahl der Blende 17 oder alternativ die Einstellung des Drosselsystems 17 ist abhängig vom Leitfähigkeitsmesserergebnis, das in der Steuerung 28 ausgewertet wird. Die gewünschte Leitfähigkeit des verschnittenen Befüllwassers soll beispielsweise 50 - 200 µS/cm betragen. Je nach Entsalzungsgrad des aus dem Ionentauscherauslass 21 austretenden Befüllwassers ist es notwendig, die Blende zu ändern bzw. Drosselsystemeinstellung anzupassen, um diesen Wert zu erreichen.

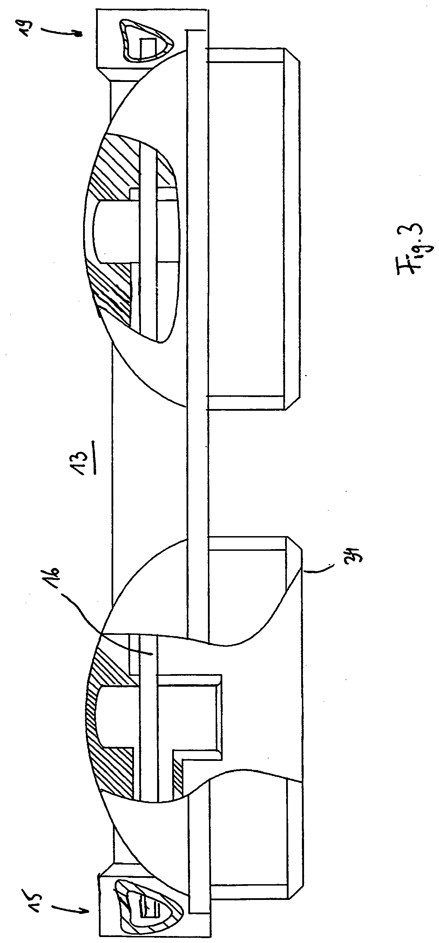

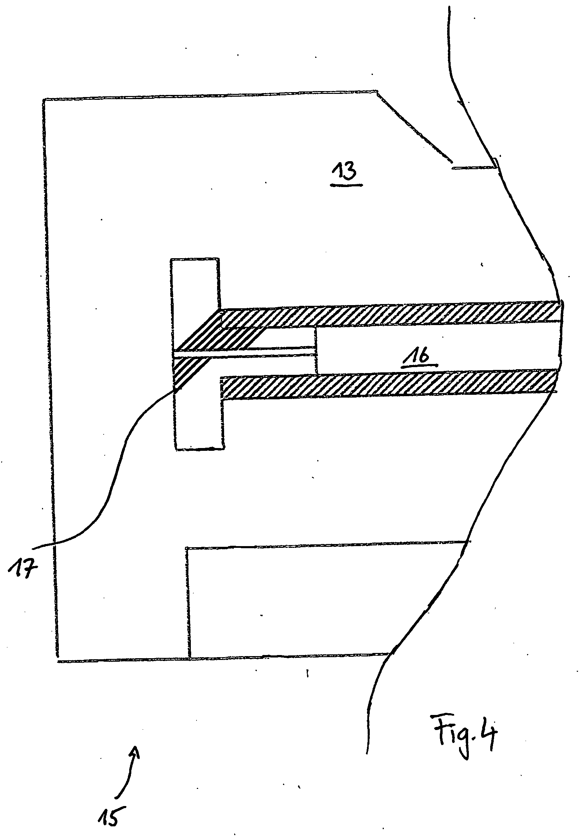

Wird ein voreingestellter Grenzwert für die Leitfähigkeit erreicht, ist davon auszugehen, dass die lonentauscherharzelemente 30 verbraucht sind und ausgetauscht oder regeneriert werden müssen. Die Steuerung betätigt dafür nach vorheriger Voralarmmeldung das Absperrventile 12, so dass ein weiterer Konditionierungsbetrieb nicht mehr möglich ist. Diese Sperrung kann erst nach Austausch /nach der Regenerierung der lonentauscherharzelemente 30 wieder aufgehoben werden. In Fig. 3 und 4 sind vergrößerte Ansichten des Mischers der Einlassseite 15 des Mischers 13 dargestellt. Alle Störmeldungen können potentialfrei an eine Gebäudeleittechnik (sofern vorhanden) weitergeleitet werden.

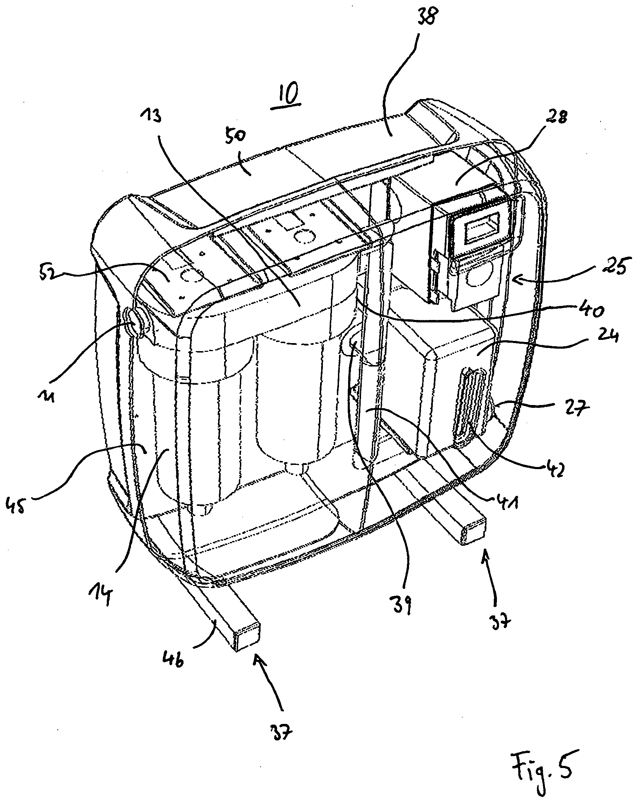

In Fig. 5 ist die zuvor beschriebene Konditionierungsvorrichtung 10 in einem Gehäuse 38 dargestellt, wobei von dem Gehäuse 38 nur die hintere Gehäuseschale 50 dargestellt ist. Verbunden mit der hinteren Gehäuseschale 50 ist eine Grundplatte 45, auf der die Elemente montiert werden. Die notwendigen Elektroleitungen 29 sind auf der Rückseite der Grundplatte 45 vorgesehen. Auf der Grundplatte 45 sind Halteelemente 52 angeordnet, über die beispielsweise Mischer 13, lonentauscher 14, Tank 24, Pumpe 25 oder Steuerung 28 mit der Grundplatte 45 verbunden sind. Der Tank 24 ist mit einem Füllstandsanzeiger 42 versehen. Für den Füllstandsanzeiger 42 des Tanks 24 ist im Gehäuse 38 eine Öffnung (nicht dargestellt) vorgesehen.

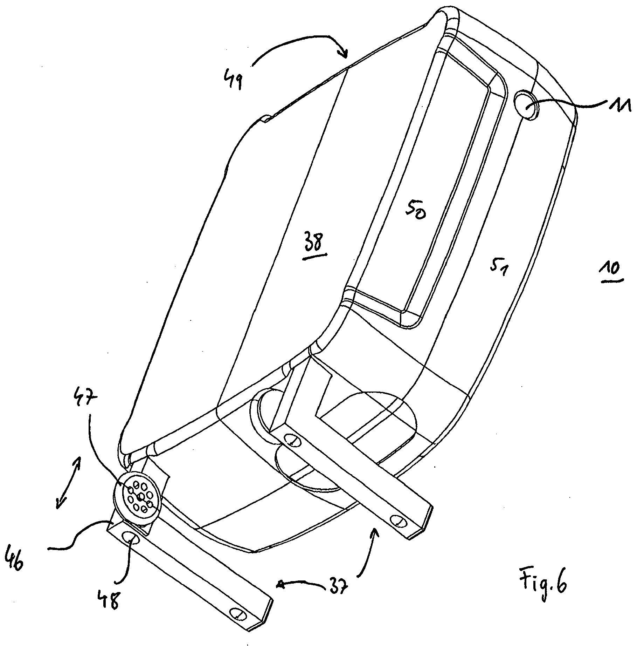

Fig. 6 zeigt eine räumliche Ansicht der Konditionierungsvorrichtung 10 im geschlossenen Gehäuse 38. Auf der Unterseite des Gehäuses 38, dass aus der hinteren Gehäuseschale 50 und der vorderen Gehäuseschale 51 zusammengesetzt ist, sind Mobilitätselemente 37 vorgesehen. Das Mobilitätselement 37 besteht aus einem Grundträger 46, auf dem Rollen 47 und Standelemente 48 angeordnet sind. Der Grundträger 46 ist L-förmig ausgeführt, so dass ein sicherer Stand des Gehäuses 38 im mobilen Einsatz gewährleistet ist. In der in Fig. 6 angegebenen Pfeilrichtung kann der Grundträger 46 aus der hinteren Gehäuseschale 50 ein- und ausgefahren werden. Optional ist der Grundträger 46 aus der hinteren Gehäuseschale 50 vollständig entnehmbar. Von der Oberseite des Gehäuses 38 ist ein Griff 49 vorgesehen, so dass die Konditionierungsvorrichtung 10 als mobile Vorrichtung ausgeführt ist. Soll die Konditionierungsvorrichtung 10 permanent in einen Helzungskreislauf 35 Integriert werden, so lassen sich die Grundträger 46 aus der hinteren Gehäuseschale 50 entfernen und die hintere Gehäuseschale 50 fest an der Wand montieren oder wahlweise ist eine Adaption auf handelsübliche Konsolen möglich.

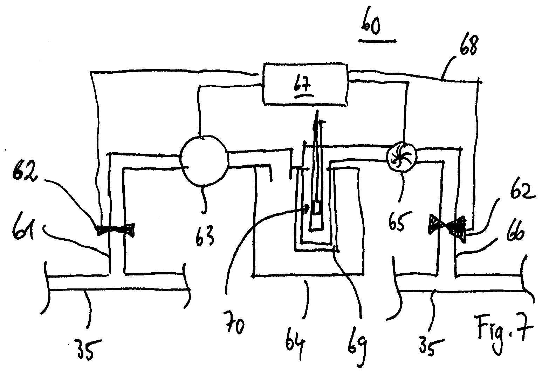

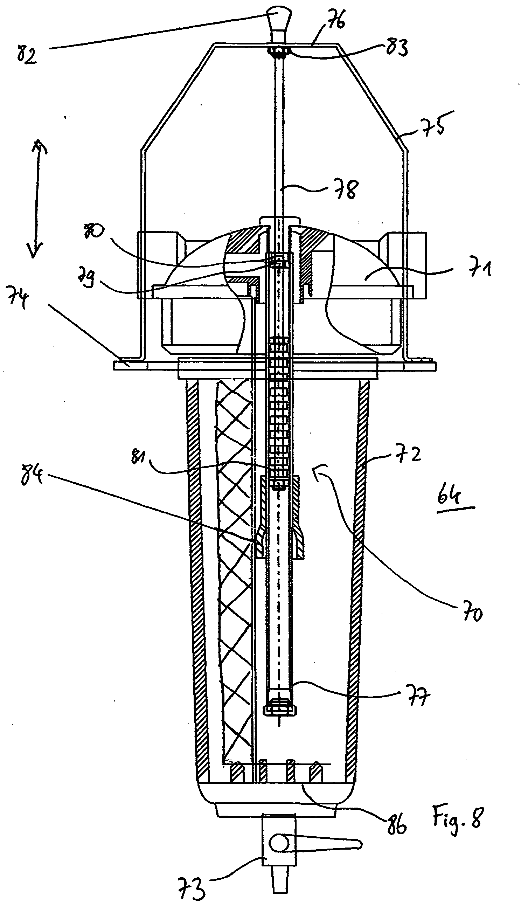

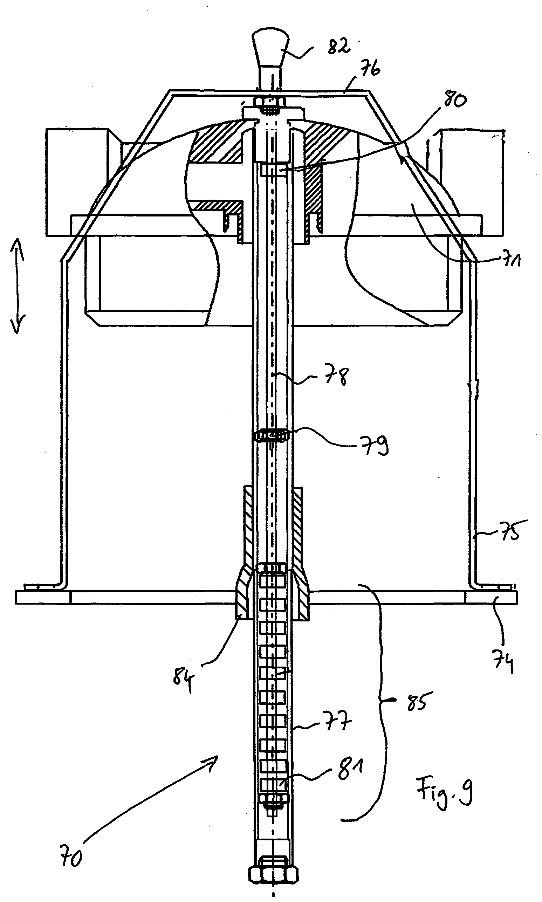

Fig. 7 zeigt eine schematische Flussdarstellung der erfindungsgemäßen Reinigungsvorrichtung 60. Die Reinigungsvorrichtung 60 weist einen Zuleitungsanschluss 61 auf, in dem ein Absperrventil 62 vorgesehen ist. Im Zuleitungsanschluss 61 ist eine Pumpe 63 vorgesehen. An den Zuleitungsanschluss 61 angeschlossen ist ein Filterelement 64. Auf der Rückseite des Filterelementes 64 ist ein Ableitungsanschluss 66 vorgesehen. Im Ableitungsanschluss 66 ist ein Durchflussmesser 65 integriert. Des Weiteren ist in der Reinigungsvorrichtung 60 eine Steuerung 67 vorgesehen. Die Steuerung 67 ist über Elektroleitungen 68 mit dem Durchflussmesser 65 und der Pumpe 63 verbunden. Im Ableitungsanschluss 66 ist ebenfalls ein Absperrventil 62 vorgesehen. Innerhalb des Filterelementes 64 befinden sich ein Filter 69 und ein Magnetabscheider 70. Das Filterelement 64 und der Magnetabscheider 70 sind in den Fig. 8 und 9 in Detaildarstellung gezeigt. Die Reinigungsvorrichtung 60 ist parallel in den Kreislauf 35 integriert.

In den Fig. 8 und 9 ist das Filterelement 64 dargestellt. Fig. 8 zeigt dabei die geöffnete Stellung Fig. 9 die geschlossene Stellung.

Das Filterelement 64 weist einen Deckel 71 und ein Gefäß 72 auf. An der Unterseite des Gefäßes 72 ist ein Ablass 73 vorgesehen. Bestandteil des Deckels 71 ist ein Arretierring 74 der über einen Bügel 75 an seiner Oberseite 76 mit einem Stab 78 des Magnetabscheiders 70 verbunden ist. An der Oberseite des Stabes 78 ist in einem Verbindungsbereich 83 mit dem Bügel 75 ein Griff 82 vorgesehen, über den der Arretierring 74, der Bügel 75 und der Stab 78 nach oben und unten bewegt werden können analog den Pfeilen in Fig. 8 und Fig. 9.

Der Deckel 71 Ist mit dem Magnetabscheider 70 verbunden. Der Magnetabscheider 70 besteht aus einer Hülse 77, die direkt mit dem Deckel 71 verbunden ist. In der Hülse 77 befindet sich der Stab 78. Der Stab 78 ist beweglich angeordnet. Auf dem Stab 78 sind Magnete 81 vorgesehen. Des Weiteren ist auf dem Stab 78 ein Widerlager 79 angeordnet. Das Widerlager 79 hat ein Gegenelement 80, das im Deckelbereich der Hülse vorgesehen Ist. Der magnetische Wirkbereich 85 des Magnetabscheiders 70 ist in Fig. 9 dargestellt. An der Hülse 77 ist ein Abscheider 84 vorgesehen.

Im Betrieb des Filterelementes 64 wird Kreislaufwasser durch die Pumpe 63 durch das Filterelement 64 gefördert. Dabei werden Partikel, die sich im Kreislaufwasser befinden beispielsweise, weil sie durch Additive im Kreislauf gelöst wurden, im Filter 69 abgeschieden. Stoffe, die von einem Magneten anziehbar sind, die nicht im Filter 69 abgeschieden wurden, weil sie eine zu kleine Größe aufweisen, lagern sich im Bereich 85 an der Hülse 77 an. Dieses erfolgt durch die magnetische Anziehung der Magnete 81 im magnetischen Bereich 85, der der Abscheidebereich ist.

Bei Erreichen eines ersten Grenzwertes für die Durchflussmenge erfolgt ein Voralarm. Wird der zweite voreingestellte Grenzwert für die Durchflussmenge unterschritten, ist das Filterelement 69 verbraucht und muss gewechselt werden. Die Steuerung 67 schaltet die Pumpe 63 ab. Zum Wechseln des Filters 69 werden über den Griff 82 der Bügel 75, und der Stab 78 sowie der Arretierring 74 nach oben bewegt. Dieses geschieht, bis das Widerlager 79 das Gegenelement 80 erreicht hat. Durch die magnetische Wirkung tritt jetzt eine Halteverbindung zwischen dem Widerlager 79 und dem Gegenelement 80 auf, sodass der Stab 78 in der geöffneten Stellung, wie dieses in Fig. 8 dargestellt ist, verbleibt. Durch das nach oben Bewegen des Stabes 78, das automatisch erfolgt, weil das Filterelement 64 nur in dieser Stellung geöffnet werden kann, werden die Magnete 81 aus dem magnetischen Bereich 85 herausbewegt. Die an der Hülse 77 angelagerten Stoffe werden nicht mehr angezogen und fallen nach unten in den Sumpf 86 des Gefäßes 72 ab. Die Stoffe, die bei der Hochziehbewegung des Stabes 78 entlang der Hülse 77 mit nach oben bewegt wurden, werden am Abscheider 84 aufgehalten und fallen dadurch ebenfalls nach unten. Anschließend wird das Gefäß 72 vom Deckel 71 gelöst, und das Filterelement 69 ausgewechselt. Das im Gefäß 72 befindliche Kreislaufwasser kann über den Ablass 73 zusammen mit den aufgefangenen Stoffen aus dem Gefäß 72 entfernt werden.

Nach Wechseln des Filters 69 wird das Gefäß 72 wieder mit dem Deckel 71 verbunden und der Arretierring 74 wird zusammen mit dem Bügel 75 und dem Stab 78 über den Griff 82 wieder nach unten bewegt, bzw. beim Aufsetzen der Haube automatisch nach unten bewegt, bis die Vorrichtung wieder arretiert ist und sich die Magnete 81 wieder im magnetischen Bereich 85 befinden.

Die Reinigungsvorrichtung wird ebenfalls in einem Gehäuse analog dem Gehäuse 38 mit gleichen oder analogen Befestigungselementen angeordnet und kann mobil wie auch stationär angeordnet werden. Alle Störmeldungen können potentialfrei an eine Gebäudeleittechnik (sofern vorhanden) weitergeleitet werden

## Patentansprüche

1. Vorrichtung zur Reinigung von Kreislaufwasser von wasserführenden Kreislaufsystemen mit wenigstens einem Zuleitungsanschluss (61) für Kreislaufwasser und einem Ableitungsanschluss (66) für gereinigtes Kreislaufwasser, einem Filterelement (64), einer Pumpe (63), über die das Filterelement (64) mit dem Kreislaufwasser druckbeaufschlagbar ist, und mit einem Magnetabscheider (70) in Verbindung mit dem Filterelement (64), wobei der Magnetabscheider ein Magnetelement (81) aufweist, dass beim Öffnen des Filterelements (64) zwangsgeführt aus dem Filterelement (64) entfernbar ist, **dadurch gekennzeichnet**, das Magnetelement (81) auf einem stabförmigen Element (78) angeordnet ist, das in einer Hülse (77) in einen Filterbereich des Filterelements (64) vorgesehen ist, und dass das Magnetelement (81) in der Hülse (77) aus dem Filterbereich zwangsgeführt herausbewegbar ist, indem das Stabelement (78) mit einem Verschlusselement (74, 75) des Filterelements (64) wirkverbunden ist, und das Stabelement (78) beim öffnen des Verschlusselementes (74, 75) eine Bewegung aus der Hülse (77) heraus durchführt.

2. Vorrichtung nach Anspruch 1, **dadurch gekennzeichnet, dass** an der Hülse (77) ein Abscheider (84) vorgesehen ist.

3. Vorrichtung nach Anspruch 1 oder 2, **dadurch gekennzeichnet, dass** ein Messsensor (65) zur Messung der Durchflussmenge durch das Filterelement (64) vorgesehen ist und/oder dass die Pumpe (63) in Abhängigkeit der Durchflussmenge steuerbar ist.

4. System mit einer Vorrichtung (60) zur Reinigung von Kreislaufwasser nach einem der Ansprüche 1 bis 3 und mit einer Vorrichtung (10) zum Konditionieren von Wasser für ein wasserführendes Kreislaufsystem mit wenigstens einem Zuleitungsanschluss (11) für das Befüllwasser, und einem Ableitungsanschluss (27) für das konditionierte Kreislaufwasser, einem Element (14) zur Einstellung der Leitfähigkeit des konditionierten Kreislaufwassers, und einem Steuerelement (28), **dadurch gekennzeichnet, dass** die Vorrichtung (10) so ausgeführt ist, dass ein Teilvolumenstrom des eingeleiteten Befüllwassers am Element (14) zur Einstellung der Leitfähigkeit vorbeiführbar ist, und mit dem in dem Element (14) zur Einstellung der Leitfähigkeit konditionierten Wasser verschneidbar ist, und dass der Teilvolumenstrom einstellbar ist.

5. System nach Anspruch 4, **dadurch gekennzeichnet, dass** zur Bereitstellung des Teilvolumenstroms ein Mischelement (13) vorgesehen ist, dessen hydraulischer Widerstand zur Einstellung des Teilvolumenstromes einstellbar ist.

6. System nach Anspruch 4 oder 5, **dadurch gekennzeichnet, dass** ein Messsensor (23) zur Messung der Leitfähigkeit des konditionierten Kreislaufwassers vorgesehen ist, wobei der Teilvolumenstrom des vorbeigeführten Befüllwassers in Abhängigkeit des Messergebnisses einstellbar ist und/oder dass ein Messsensor (22) zur Messung der Durchflussmenge des konditionierten Kreislaufwassers vorgesehen ist.

7. System nach einem der Ansprüche 4 bis 6, **dadurch gekennzeichnet, dass** das Mischelement (13) einen parallel zum Element (14) zur Einstellung der Leitfähigkeit geschalteten Leitungsweg (16) aufweist, der mit einem Element (17) zur Querschnittsänderung, bevorzugt einer Drosselklappe und/oder Blende, versehen ist, über das eine Querschnittsänderung des Leitungsweges (16) bewirkbar ist.

8. System nach einem der Ansprüche 4 bis 7, **dadurch gekennzeichnet, dass** das Element (14) zur Einstellung der Leitfähigkeit ein lonentauscherharzelement (30) beinhaltet.

9. System nach einem der Ansprüche 4 bis 8, **dadurch gekennzeichnet, dass** ein Tank (24) in Verbindung mit einer Pumpe (25) vorgesehen ist.

10. System nach einem der Ansprüche 4 bis 9, **dadurch gekennzeichnet, dass** die Vorrichtung in einem Gehäuse (38) mit Griff (49) und ausfahrbaren Rollen (47) angeordnet Ist.

## Claims

1. Device for cleaning circulation water of water-carrying circulation systems with at least one inlet line connection (61) for circulation water and an outlet line connection (66) for cleaned circulation water, a filter element (64), a pump (63) via which the filter element (64) can be pressurized with the circulation water, and with a magnetic separator (70) in connection with the filter element (64), wherein the magnetic separator has a magnetic element (81) which, on opening the filter element (64), can be removed from the filter element (64) in a positively guided manner, **characterized in that** the magnetic element (81) is arranged on a bar-shaped element (78) which is provided in a sleeve (77) in a filter region of the filter element (64), and **in that** the magnetic element (81) in the sleeve (77) can be moved out of the filter region in a positively guided manner by the bar element (78) being operatively connected to a closure element (74, 75) of the filter element (64), and, on opening the closure element (74, 75), the bar element (78) executes a movement out of the sleeve (77).

2. Device according to Claim 1, **characterized in that** a separator (84) is provided on the sleeve (77).

3. Device according to Claim 1 or 2, **characterized in that** a measuring sensor (65) for measuring the flow quantity through the filter element (64) is provided and/or **in that** the pump (63) is controllable in dependence on the flow quantity.

4. System with a device (60) for cleaning circulation water according to one of Claims 1 to 3 and with a device (10) for conditioning water for a water-carrying circulation system with at least one inlet line connection (11) for the filling water, and an outlet line connection (27) for the conditioned circulation water, an element (14) for setting the conductivity of the conditioned circulation water, and a control element (28), **characterized in that** the device (10) is embodied such that a partial volume flow of the introduced filling water can be guided past the element (14) for setting the conductivity and can be diluted with the water conditioned in the element (14) for setting the conductivity, and **in that** the partial volume flow is settable.

5. System according to Claim 4, **characterized in that**, in order to make available the partial volume flow, a mixing element (13) is provided whose hydraulic resistance is settable in order to set the partial volume flow.

6. System according to Claim 4 or 5, **characterized in that** a measuring sensor (23) for measuring the conductivity of the conditioned circulation water is provided, wherein the partial volume flow of the filling water guided past can be set in dependence on the measurement result and/or **in that** a measuring sensor (22) for measuring the flow quantity of the conditioned circulation water is provided.

7. System according to one of Claims 4 to 6, **characterized in that** the mixing element (13) has a line path (16) which is connected parallel to the element (14) for setting the conductivity and which is provided with an element (17) for changing the cross section, preferably a throttle valve and/or orifice plate, via which element a change in cross section of the line path (16) can be achieved.

8. System according to one of Claims 4 to 7, **characterized in that** the element (14) for setting the conductivity contains an ion-exchange resin element (30) .

9. System according to one of Claims 4 to 8, **characterized in that** a tank (24) in connection with a pump (25) is provided.

10. System according to one of Claims 4 to 9, **characterized in that** the device is arranged in a housing (38) with a handle (49) and extendable rollers (47) .

## Revendications

1. Dispositif de purification d'eau de circuit de systèmes de circuit transportant de l'eau avec au moins un raccord d'arrivée (61) pour l'eau de circuit et un raccord d'évacuation (66) pour l'eau de circuit purifiée, un élément de filtre (64), une pompe (63), par laquelle l'élément de filtre (64) peut être mis sous pression avec l'eau de circuit, et avec un séparateur magnétique (70) en liaison avec l'élément de filtre (64), dans lequel le séparateur magnétique présente un élément magnétique (81), qui peut être enlevé hors de l'élément de filtre (64) par guidage forcé lors de l'ouverture de l'élément de filtre (64), **caractérisé en ce que** l'élément magnétique (81) est disposé sur un élément en forme de barre (78) qui est prévu dans une douille (77) dans une zone de filtre de l'élément de filtre (64), et **en ce que** l'élément magnétique (81) dans la douille (77) peut être retiré en guidage forcé hors de la zone de filtre, par le fait que l'élément de barre (78) est en liaison active avec un élément de fermeture (74, 75) de l'élément de filtre (64), et que l'élément de barre (78) effectue un mouvement hors de la douille (77) lors de l'ouverture de l'élément de fermeture (74, 75).

2. Dispositif selon la revendication 1, **caractérisé en ce qu'**il est prévu un séparateur (84) sur la douille (77).

3. Dispositif selon la revendication 1 ou 2, **caractérisé en ce qu'**il est prévu un capteur de mesure (65) pour la mesure du débit à travers l'élément de filtre (64) et/ou **en ce que** la pompe (63) peut être commandée en fonction du débit.

4. Système avec un dispositif (60) de purification d'eau de circuit selon l'une quelconque des revendications 1 à 3 et avec un dispositif (10) de conditionnement d'eau pour un système de circuit transportant de l'eau avec au moins un raccord d'arrivée (11) pour l'eau de remplissage et un raccord d'évacuation (27) pour l'eau de circuit conditionnée, un élément (14) pour le réglage de la conductibilité de l'eau de circuit conditionnée, et un élément de commande (28), **caractérisé en ce que** le dispositif (10) est réalisé de telle manière qu'un courant volumique partiel de l'eau de remplissage introduite puisse être dévié à côté de l'élément (14) pour le réglage de la conductibilité et puisse être mélangé avec l'eau conditionnée dans l'élément (14) pour le réglage de la conductibilité, et **en ce que** le courant volumique partiel est réglable.

5. Système selon la revendication 4, **caractérisé en ce qu'**il est prévu, pour la préparation du courant volumique partiel, un élément de mélange (13), dont la résistance hydraulique est réglable pour le réglage du courant volumique partiel.

6. Système selon la revendication 4 ou 5, **caractérisé en ce qu'**il est prévu un capteur de mesure (23) pour la mesure de la conductibilité de l'eau de circuit conditionnée, dans lequel le courant volumique partiel de l'eau de remplissage déviée est réglable en fonction du résultat de mesure et/ou **en ce qu'**il est prévu un capteur de mesure (22) pour la mesure du débit de l'eau de circuit conditionnée.

7. Système selon l'une quelconque des revendications 4 à 6, **caractérisé en ce que** l'élément de mélange (13) présente un chemin de conduite (16) connecté parallèlement à l'élément (14) pour le réglage de la conductibilité, et qui est muni d'un élément (17) pour la modification de la section transversale, de préférence d'un clapet d'étranglement et/ou d'un diaphragme, au moyen duquel il est possible de provoquer une modification de la section transversale du chemin de conduite (16).

8. Système selon l'une quelconque des revendications 4 à 7, **caractérisé en ce que** l'élément (14) pour le réglage de la conductibilité comporte un élément de résine échangeuse d'ions (30).

9. Système selon l'une quelconque des revendications 4 à 8, **caractérisé en ce qu'**il est prévu un réservoir (24) en communication avec une pompe (25).

10. Système selon l'une quelconque des revendications 4 à 9, **caractérisé en ce que** le dispositif est agencé dans un boîtier (38) avec une poignée (49) et des roulettes extensibles (47).
